# EUROPÄISCHE PATENTSCHRIFT

(11) **EP 0 972 972 B1**
(45) Veröffentlichungstag und Bekanntmachung des Hinweises auf die Patenterteilung: **21.01.2004**
(21) Anmeldenummer: 99113016.2
(22) Anmeldetag: 06.07.1999
(51) Int. Cl.: F02D 41/08, F02D 41/12, F02D 13/02, F02B 29/02

(54) **Betriebsverfahren für eine Fahrzeug-Brennkraftmaschine**
Operating method for a vehicle internal combustion engine
Méthode de fonctionnement pour un moteur automobile à combustion interne

(30) Priorität: 14.07.1998 DE 19831515
(43) Veröffentlichungstag der Anmeldung: 19.01.2000
(73) Patentinhaber: Bayerische Motoren Werke Aktiengesellschaft, 80788 München (DE)
(72) Erfinder: Lemberger, Heinz, 85774 Unterföhring (DE); Leistner, Marian, 80939 München (DE)
(74) Vertreter: Wesel-Mair, Julia (DE)

(56) Entgegenhaltungen:
- EP-A- 0 446 065
- DE-A- 4 340 614
- US-A- 4 765 288
- US-A- 5 199 326
- US-A- 5 605 128

## Beschreibung

Die Erfindung betrifft ein Betriebsverfahren für eine Fahrzeug-Brennkraftmaschine gemäß dem Oberbegriff des Patentanspruchs 1.

Zur Verbesserung der Zylinderbefüllung ist es bekannt, Brennkraftmaschinen mit verstellbaren Nockenwellen auszustatten. Mit ihr können die Öffnungsund Schließzeiten der Einlaßventile drehzahl- und lastabhängig gesteuert und an die Leistungserfordernisse angepaßt werden. Insbesondere kann eine Ventilüberschneidung verkürzt oder verlängert werden.

Bei einer bekannten Ausführungsvariante einer verstellbaren Nockenwelle wird die Verstellung vom Drucköl des Motorölkreislaufs gesteuert, der gegen einen Stellkolben drückt und die Nockenwelle in Richtung einer Früh- oder Spätstellung verdreht. Beispielsweise sollte sich die Nockenwelle bei Vollast im unteren Drehzahlbereich in einer Frühstellung befinden, da dann der aufwärtsgehende Kolben keine Frischgase mehr in das Saugrohr zurückschieben kann. Damit wird das Motordrehmoment deutlich verbessert.

Bei einer Volllast im oberen Drehzahlbereich sollte eine Spätstellung gewählt werden, da dann der Nachladeeffekt der Frischgase die Zylinderfüllung und das Drehmoment deutlich verbessern. Jedoch ist im Leerlauf- und Teillastbereich insbesondere eine Spätstellung der Einlaß-Nockenwelle anzustreben, da dann das Rückströmen von Abgas auf die Saugseite vermindert wird. Im Extremfall kann eine Frühverstellung des einstellbaren Ventiltriebes zu einer Funktionsstörung beim Start eines "abgewürgten" Motors führen. Aus diesem Grunde muß darauf geachtet werden, daß durch die den variablen Ventiltrieb steuernde Verstelleinrichtung die Nockenwelle möglichst bei jeder Fahrzeugbetriebsbedingung wieder in ihre Startposition zurückgebracht werden kann. Dies ist insbesondere bei druckölbetriebenen Verstelleinrichtungen problematisch, wenn eine hohe Öltemperatur vorliegt und die Motordrehzahl schnell abnimmt. In diesem Fall kann der erforderliche Motoröldruck nicht mehr zur Verfügung gestellt werden.

Ferner offenbart die DE 43 40 614 A1 eine Vorrichtung zur Verdrehung einer Nockenwelle in Kraftfahrzeugen und ein entsprechendes gattungsgemäßes Verfahren. Diese Vorrichtung umfasst ein regelbares Stellglied, welches durch ein vorgegebenes elektrisches Ansteuersignal angesteuert wird. Dieses elektrische Ansteuersignal setzt sich zusammen, aus einem Grund-Ansteuersignal, welches sich aus der Differenz zwischen der Ist-Position und der Soll-Position der Nockenwelle ergibt und aus einem, abhängig von der Öltemperatur und der Drehzahl der Brennkraftmaschine berechneten Korrekturwert. Auf diese Weise ergibt sich ein Ansteuersignal für ein Stellglied mit unterschiedlichen Ansteuerzeiten für unterschiedliche Betriebszustände. Aufgabe der Erfindung ist es, ein alternatives Betriebsverfahren anzugeben, bei dem bei jeder Betriebsbedingung ein ausreichender Motoröldruck gewährleistet ist.

Diese Aufgabe wird durch die in Anspruch 1 genannten Merkmale gelöst. Demgemäß wird die Leerlaufdrehzahl des Motors dann erhöht oder eine Motordrehzahlabnahme dann verzögert, wenn der Grenzwert für eine Motoröltemperatur überschritten ist und bestimmte Motordrehzahlbedingungen erfüllt sind, insbesondere Motordrehzahlbedingungen, welche einen zu geringen Motoröldruck hervorrufen. Mit dieser Maßnahme wird sichergestellt, daß durch eine künstlich hochgehaltene Motordrehzahl immer ein ausreichender Motoröldruck bereitgestellt werden kann. Dadurch kann die Ausgangsposition der Nockenwelle auch im Leerlauf oder bei einer schnell absinkenden Motordrehzahl immer erreicht werden. Damit läßt sich ein sicherer Motorbetrieb bei allen Betriebsbedingungen, insbesondere bei einem Neustart nach einem "Abwürgen" des Motors oder bei einer schnellen Drehzahlabnahme des Motors gewährleisten.

Eine vorteilhafte Ausführungsform ist dadurch gekennzeichnet, daß zusätzlich ein Nockenwellenverstellwert ermittelt und die Drehzahlveränderung dann vorgenommen wird, wenn neben dem Überschreiten des Grenzwerts für eine Motoröltemperatur und den bestimmten Motordrehzahlbedingungen auch der momentane Nockenverstellungswert nicht einem vorgegebenen Wert, insbesondere einem Startwert entspricht.

Der Grenzwert für die Motoröltemperatur liegt zwischen 100°C und 170°C, insbesondere bei etwa 130°C.

Vorzugsweise wird die Leerlaufdrehzahl dann kurzfristig erhöht, wenn die Motordrehzahl unter einem vorgegebenen Wert, insbesondere unter 1000 U/min fällt.

Ferner kann die Drehzahlabnahme der Motordrehzahl dann verzögert werden, wenn die Motordrehzahl noch größer einem vorgegebenen zweiten Wert ist. Dieser zweite Wert kann dem ersten Wert gleich sein; also auch etwa 1000 U/min.

Natürlich können neben der Motoröltemperatur, der Motordrehzahl und dem Nockenverstellungswert auch andere Kennwerte wie der Motoröldruck, die Kühlmitteltemperatur, die Außentemperatur, der Kennfeldpunkt des Motorbetriebs und/oder die maximal zulässige Leerlaufzahl erfaßt und von einer Logikschaltung verarbeitet werden, wobei dann alle vorgenannten Daten einen Beitrag für die Einstellung der Motordrehzahl liefert. Die Einstellung erfolgt vorzugsweise über eine elektronische Steuereinheit, die einen entsprechenden Steuerbefehl für die Einstellung der Motordrehzahl liefert.

Insgesamt läßt sich nicht nur ein sicherer Betrieb einer Brennkraftmaschine realisieren, sondern auch zusätzlich die Anforderungen an die Ölversorgung und die Ölpumpenleistung reduzieren. Damit ergibt sich eine Kraftstoffeinsparung durch eine Reduzierung des von der Ölversorgung erzeugten Reibleistungsanteils. Ferner kann die Motoröltemperatur auch bei höheren Drehzahlen gesenkt werden, da eine geringere Wärmeeinbringung durch eine reduzierte Ölpumpenleistung erfolgt. Damit verbunden ist ebenfalls eine Reduzierung an die Anforderung des Kühlsystems. Von großem Vorteil ist ferner, daß sich bei der oben dargestellten Erfindung keine zusätzlichen Kosten ergeben, da weder konstruktive Änderungen bzw. Änderungen bei der Hardware notwendig sind.

Eine Ausführungsform der Erfindung wird nachfolgend anhand der beiliegenden Zeichnungen erläutert. Die Zeichnungen zeigen in
- Fig. 1: einen Verfahrensablauf bei einem erfindungsgemäßen Betriebsverfahren,
- Fig. 2: ein Diagramm, welches eine Leerlauferhöhung darstellt und
- Fig.3: ein Diagramm, welches eine Verzögerung einer Motordrehzahlabnahme zeigt.

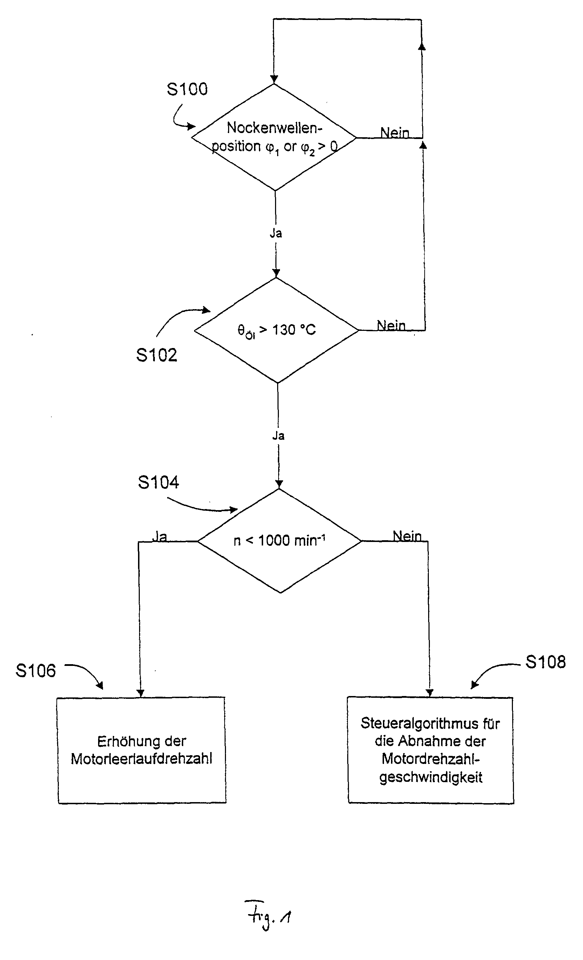

Das in Fig. 1 dargestellte Verfahren kommt bei einer Nockenwellensteuerung zum Einsatz, welche über den Öldruck eines Motorölkreislaufs gesteuert wird. Es soll sicherstellen, daß auch bei ungünstigen Fahrzeugbetriebsbedingungen, nämlich hohen Motoröltemperaturen und niedrigen oder schnell abnehmenden Motordrehzahlen eine Rückführung der Nockenwelle in die Start- oder Verschließposition sichergestellt werden kann. Dazu ist es notwendig, den Öldruck aufrecht zu erhalten. Im folgenden wird diese Aufgabe jedoch nicht - wie herkömmlich - über eine überdimensionierte Ölversorgung gelöst, die einen permanenten Mehrverbrauch an Kraftstoff bedeutet. Vielmehr erfolgt eine Regelung der Motordrehzahl in der Weise, daß die angesprochenen Nachteile vermieden werden können.

Gemäß Fig. 1 wird in einem Schritt S100 zunächst überprüft, ob die Position der Nockenwelle (position of cam shaft) von einer Schließposition (locked position) abweicht; also ϕ1 oder ϕ2 > 0, wenn die 0-Stellung gefordert ist. Ergibt diese Prüfung, daß die Nockenwelle sich in ihrer Ausgangsposition befindet, so braucht keine zusätzliche Maßnahme ergriffen werden und es wird zum Ausgangspunkt zurückverzweigt.

Befindet sich die Nockenwelle jedoch nicht in der geforderten Position, so wird im Schritt S102 geprüft, ob die Motoröltemperatur θ_{Öl} größer als 130°C ist (θ_{Öl} > 130°C). Ist die Motoröltemperatur nicht größer als 130°C so wird zum Anfang zurückverzweigt.

Andernfalls wird im Schritt S104 geprüft, ob die Motordrehzahl kleiner als 1000 U/min ist (n < 1000 U/min).

Ist die Motorumdrehung nicht kleiner als 1000 U/min, so wird im Schritt S108 ein Algorithmus gestartet, der eine Verzögerung der Motordrehzahlabnahme sicherstellt.

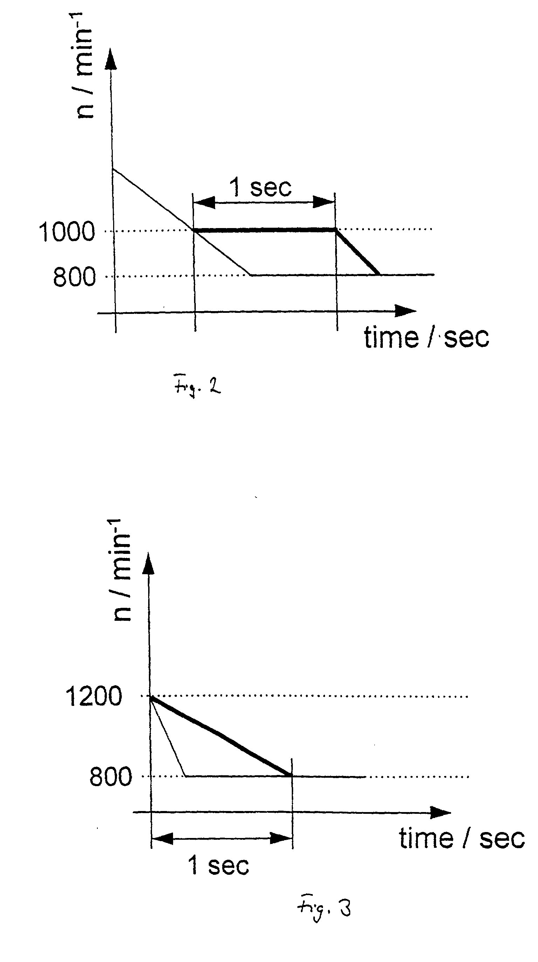

Die Auswirkung einer solchen Steuerung sind in Fig. 3 zu sehen. In dieser Figur ist die Motordrehzahl über der Zeit (time) aufgetragen. Mit dünner Linie ist ein normaler Drehzahlverlauf ohne Eingriff dargestellt. Bei diesem Verlauf fällt die Motordrehzahl zunächst von 1200 U/min auf 800 U/min steil ab und stabilisiert sich dann auf dem letztgenannten Niveau. Greift der in S108 genannte Algorithmus jedoch ein, so nimmt die Motordrehzahl weniger schnell ab. Dies kommt in Fig. 3 durch die dick dargestellte Linie zum Ausdruck, welche die Motordrehzahlabnahme über einen wesentlich längeren Zeitraum als vorher erstreckt.

Über diesen Zeitraum von vorliegend etwa 1 Sec. bleibt der Druck des Motoröls in ausreichendem Maß erhalten, so daß eine Rückstellung des einstellbaren Ventiltriebs in die Ausgangs- oder Startposition sichergestellt werden kann.

Wird in Schritt S104 jedoch erfaßt, daß sich die Motordrehzahl unterhalb von 1000 U/min befindet, so wird in Schritt S106 eine Leerlaufdrehzahlerhöhung vorgenommen. Eine solche Leerlaufdrehzahlerhöhung geht aus Fig. 2 hervor. Demgemäß wird über einen Zeitraum von z. B. 1 Sec. die Leerlaufdrehzahl von 800 auf 1000 U/min angehoben und die Motordrehzahl nimmt dann nicht den mit dünner Linie in Fig. 2 dargestellten Verlauf, sondern den mit dicker Linie überlagerten Verlauf. Über den kurzen Zeitraum von 1 Sekunde liegt die Leerlaufmotordrehzahl dann bei 1000 U/min, welche ebenfalls einen notwendigen Motoröldruck gewährleistet.

Mit den vorgenannten einfachen Regelungen ist eine kostengünstige und wirksame Möglichkeit eines sicheren Betriebs einer Fahrzeug-Brennkraftmaschine möglich.

## Patentansprüche

1. Betriebsverfahren für eine Fahrzeug-Brennkraftmaschine, deren Drehzahl von einer elektronischen Steuereinheit unter Berücksichtigung von Randbedingungen eingestellt wird und deren Motorölkreislauf über eine Verstelleinrichtung, die eine verstellbare Nockenwelle beaufschlagt, eine Änderung der Ventilschließ- und öffnungszeiten steuert, bei dem zumindest die Motordrehzahl und die Öltemperatur kontinuierlich ermittelt werden,
**dadurch gekennzeichnet,**
**daß** je nach Erfüllung bestimmter Motordrehzuhlbedingungen die Lehrlaufdrehzahl des Motors kurzfristig erhöht beziehungsweise eine Motordrehzahlabnahme kurzfristig verzögert wird, wenn der Grenzwert für eine Motoröltemperatur überschritten ist.

2. Betriebsverfahren nach Anspruch 1,
**dadurch gekennzeichnet,**
**daß** ein momentaner Nockenwellenverstellungswert ermittelt und eine Motordrehzahlveränderung dann vorgenommen wird, wenn zusätzlich der Nockenwellenverstellungwert nicht einem Ausgangs- oder Startwert entspricht.

3. Betriebsverfahren nach Anspruch 1,
**dadurch gekennzeichnet,**
**daß** der Grenzwert für die Motoröltemperatur zwischen 100 °C und 170 °C, insbesondere bei 130 °C liegt.

4. Betriebsverfahren nach einem der Ansprüche 1 bis 3,
**dadurch gekennzeichnet,**
**daß** die Leerlaufdrehzahl kurzfristig erhöht wird, wenn die Motordrehzahl unter einen vorgebenen ersten Wert fällt.

5. Betriebsverfahren nach einem der Ansprüche 1 bis 4,
**dadurch gekennzeichnet,**
**daß** die Drehzahlabnahme der Motordrehzahl dann verzögert wird, wenn die Motordrehzahl größer einem vorgegebenen zweiten Wert ist.

6. Betriebsverfahren nach einem der Ansprüche 1 bis 5,
**dadurch gekennzeichnet,**
**daß** neben der Motoröltemperatur und der Motordrehzahl auch die Kennwerte Motoröldruck, Kühlmitteltemperatur, Außentemperatur, Kennfeldpunkt des Motorbetriebs und/oder die maximal zulässige Leerlaufdrehzahl erfaßt und von einer Logikschaltung verarbeitet werden, die dann der elektronischen Steuereinheit einen entsprechend den vorgegebenen Kennwerten korrigierten Steuerbefehl für die Einstellung der Motordrehzahl liefert.

## Claims

1. An operating method for a vehicle internal-combustion engine, of which the speed is adjusted by an electronic control unit taking into consideration boundary conditions and of which the engine lubricating system controls a change in the valve closing and opening times via an adjusting device which loads an adjustable camshaft, in which method at least the engine speed and the oil temperature are continuously determined, **characterised in that** depending on specific engine speed conditions being fulfilled, the idle speed of the engine is increased for a short time or a reduction in the engine speed is delayed for a short time when the limit value for an engine oil temperature is exceeded.

2. An operating method according to claim 1, **characterised in that** an instantaneous camshaft adjustment value is determined and the engine speed is changed when in addition the camshaft adjustment value does not correspond to an initial or starting value.

3. An operating method according to claim 1, **characterised in that** the limit value for the engine oil temperature is between 100°C and 170°C, in particular 130°C.

4. An operating method according to any one of claims 1 to 3, **characterised in that** the idle speed is increased for a short time when the engine speed falls below a predetermined first value.

5. An operating method according to any one of claims 1 to 4, **characterised in that** the reduction in speed of the engine speed is delayed when the engine speed is greater than a predetermined second value.

6. An operating method according to any one of claims 1 to 5, **characterised in that**, apart from the engine oil temperature and the engine speed, the engine oil pressure characteristic values, coolant temperature, outside temperature, characteristic map point of the engine operation and/or the maximum permitted idle speed are also detected and processed by a logic circuit which then supplies the electronic control unit with a control command for the adjustment of the engine speed corrected according to the predetermined characteristic values.

## Revendications

1. Procédé de fonctionnement d'un moteur à combustion interne de véhicule, dont la vitesse est réglée par une unité de commande électronique en tenant compte de conditions secondaires, et dont le circuit d'huile du moteur commande une modification des temps de fermeture et d'ouverture de la soupape à l'aide d'un dispositif de réglage qui contraint un arbre à cames réglable, dans le cas de ce procédé au moins le régime du moteur et la température d'huile sont déterminés en continu,
**caractérisé en ce que**
le régime du ralenti est augmenté à court terme si des conditions de régime du moteur sont remplies, respectivement une diminution de régime du moteur est ralentie à court terme lorsque la valeur limite de température d'huile du moteur est dépassée.

2. Procédé de fonctionnement selon la revendication 1,
**caractérisé en ce qu'**
une valeur instantanée de réglage de l'arbre à cames est déterminée et qu'une modification de régime du moteur est alors entreprise lorsqu'en plus la valeur de réglage de l'arbre à cames ne correspond pas à une valeur initiale ou de démarrage.

3. Procédé de fonctionnement selon la revendication 1,
**caractérisé en ce que**
la valeur limite de température d'huile du moteur est comprise entre 100°C et 170°C, et est notamment de 130°C.

4. Procédé de fonctionnement selon l'une quelconque des revendications 1 à 3,
**caractérisé en ce que**
le régime de ralenti est augmenté à court terme lorsque le régime du moteur tombe en dessous d'une première valeur prédéfinie.

5. Procédé de fonctionnement selon l'une quelconque des revendications 1 à 4,
**caractérisé en ce que**
la diminution du régime du moteur est ralentie lorsque le régime du moteur est supérieur à une deuxième valeur prédéfinie.

6. Procédé de fonctionnement selon l'une quelconque des revendications 1 à 5,
**caractérisé en ce que**
les paramètres : pression d'huile moteur, température du liquide de refroidissement, température extérieure, point de champ caractéristique du fonctionnement du moteur et/ou régime de ralenti maximal admissible sont saisis, outre la température d'huile du moteur et le régime du moteur, et traités par un circuit logique qui livre ensuite à l'unité de commande électronique une instruction de commande corrigée en fonction des valeurs caractéristiques prédéfinies pour le réglage du régime du moteur.
